(19) Europäisches Patentamt
European Patent Office
Office européen des brevets

(11) **EP 1 284 061 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **01943144.4**

(22) Anmeldetag: **23.05.2001**

(51) Int Cl.⁷: $H04J\ 13/00$, $H04B\ 7/26$

(86) Internationale Anmeldenummer:
**PCT/DE2001/001980**

(87) Internationale Veröffentlichungsnummer:
**WO 2001/091337 (29.11.2001 Gazette 2001/48)**

(54) **VERFAHREN ZUR SYNCHRONISATION EINES EMPFÄNGERS MIT EINEM SENDER**

METHOD FOR SYNCHRONIZING A RECEIVER WITH A TRANSMITTER

PROCEDE POUR SYNCHRONISER UN RECEPTEUR AVEC UN EMETTEUR

(84) Benannte Vertragsstaaten:
**DE ES FR GB IT**

(30) Priorität: **23.05.2000 EP 00111115**

(43) Veröffentlichungstag der Anmeldung:
**19.02.2003 Patentblatt 2003/08**

(73) Patentinhaber: **SIEMENS AKTIENGESELLSCHAFT 80333 München (DE)**

(72) Erfinder: **RAAF, Bernhard 81475 München (DE)**

(56) Entgegenhaltungen:
**EP-A- 0 586 090        WO-A-00/13358
US-A- 6 005 854**

• **MTISUBISHI ELECTRIC: "Optimised Code sets for PSCH in UTRATDD" 3GPP TSG RAN WG1#13, 22. - 25. Mai 2000, Seiten 1-3, XP002186142 Tokyo, Japan in der Anmeldung erwähnt**

**Beschreibung**

Die Erfindung betrifft ein Verfahren zur Synchronisation eines Empfängers mit einem Sender, insbesondere innerhalb eines Mobilfunknetzes, sowie eine entsprechende Sende- und Empfangseinrichtung.

Die rasante technische Entwicklung auf dem Gebiet der Mobilkommunikation hat in den letzten Jahren zur Entwicklung neuer Mobilfunksysteme der dritten Generation geführt. Dabei spielt das sogenannte UMTS (Universal Mobile Telecommunications System), das zumindest teilweise auf der WCDMA (Wideband Code Divisison Multiple Access) Technologie basiert, eine wesentliche Rolle. Die Luftschnittstelle dieses Systems, UTRA (UMTS Terrestrial Radio Access), bildet ein zentrales Element dieses Systems. Diese Luftschnittstelle kann gemäß dem Stand der Technik durch zwei verschiedene Duplexarten, TDD (Time Division Duplex) bzw. FDD (Frequency Division Duplex) realisiert werden.

Zur Synchronisation eines Empfängers (Mobilstation, Teilnehmerstation) mit einem Sender (Basisstation) ist es bekannt, ein erstes Synchronisationssignal (Synchronisationsfolge, Synchronisationssequenz, Synchronisationscode, Code-Wort) PSC (Primary Synchronisation Code) zur Detektion einer Zelle bzw. einer Basisstation und zweite Synchronisationssignale (Synchronisationsfolge, Synchronisationssequenz, Synchronisationscode, Code-Wort) SSC (Secondary Synchronisation Codes) zur Identifikation verschiedener Parameter der detektierten Zelle bzw. Basisstation vom Sender (Basisstation) an den Empfänger (Mobilstation) zu senden. Eine derartige Synchronisation wird auch Zellsuche genannt.

Dabei ist es auch aus [1] und [5] bekannt, für UTRA FDD und UTRA TDD den gleichen PSC und die gleichen SSCs zu verwenden.

Hierbei ergibt sich allerdings die Situation, daß für UTRA FDD zur Synchronisation mit Teilnehmerstationen die Verwendung von 16 verschiedenen SSCs erforderlich ist, wohingegen für UTRA TDD zur Synchronisation mit Teilnehmerstationen die Verwendung von nur 12 verschiedenen SSCs erforderlich ist.

Der Satz von 16 SSCs ist in UTRA TDD in fünf Codesätze gruppiert, von denen vier Codesätze, die jeweils drei SSCs enthalten, in UTRA TDD zur Synchronisation benützt werden und ein Codesatz, der vier SSCs enthält, in UTRA TDD nicht zur Synchronisation benützt wird. Drei SSCs eines Codesatzes werden parallel mit dem PSC zu Synchronisationszwecken in den Zeitschlitzen ausgesendet, denen ein PSCH (Primary Synchronisation Channel) zugeordnet ist.

Der PSC ist eine sogenannte "Generalised Hierarchical Golay Sequence" mit guten aperiodischen Autokorrelationseigenschaften, welche aus [2] an sich bekannt ist.

Der PSC ist demnach insbesondere durch die folgende Konstruktionsvorschrift definiert:

- Es sei $a = < x_1, x_2, x_3, ..., x_{16} > = < 1, 1, 1, 1, 1, 1, -1, -1, 1, -1, 1, -1, 1, -1, -1, 1 >$ eine Folge von 16 Elementen.
- Der PSC wird dann dadurch erzeugt, daß 'a' mit einer Komplementären Golay Sequenz moduliert wird. Die Folge a wird also wiederholt, und bei jeder Wiederholung werden alle Elemente der Folge a mit dem der Widerholung entsprechenden Wert der Komplementären Golay Sequenz multipliziert. Anschließend werden alle Elemente mit der komplexen Zahl (1+j) multipliziert. Dadurch wird eine komplexwertige Sequenz generiert, die einen identischen Real- und Imaginärteil hat.
- Der PSC $C_p$ ist somit definiert als:
  $C_p = < y(0),y(1),y(2),...,y(255) >$, wobei gilt:
  $y = (1+j) \times < a,a,a,-a,-a,a,-a,-a,a,a,a,-a,a,-a,a,a >$; der Wert mit dem kleinsten Index y(0) entspricht dabei dem ersten in einem Zeitschlitz gesendeten Symbol oder Chip.

Die 16 SSCs $\{C_0,...,C_{15}\}$, welche ebenfalls aus [5] bekannt sind, basieren auf Hadamard-Folgen, welche durch jede 16-te Zeile, beginnend mit Zeile 0, einer positionsweise verwürfelten Hadamard-Matrix $H_8$ gebildet sind. Sie sind ebenfalls komplexwertige Sequenzen, die einen identischen Real-und Immaginärteil haben.

Insbesondere werden die 16 SSCs wie folgt gebildet:

- Die 16 SSCs (SSC Code-Worte) $\{C_0,...,C_{15}\}$ sind erhältlich durch eine positionsweise Multiplikation einer Hadamard-Folge mit der Folge z, die definiert ist als
  $z = <b,b,b,-b,b,b,-b,-b,b,-b,b,-b,-b,-b,b,-b>$ , wobei gilt:
  $b = <x_1,...,x_8,-x_9,...,-x_{16}> = <1, 1, 1, 1, 1, 1, -1, -1, -1, 1, - 1, 1, -1, 1, 1, -1>$;
- Die Hadamard-Folgen werden als Zeilen der Matrix $H_8$ definiert, wobei $H_8$ durch folgende rekursive Definition bestimmt ist:

$$H_0 = (1)$$

$$H_k = \begin{pmatrix} H_{k-1} & H_{k-1} \\ H_{k-1} & -H_{k-1} \end{pmatrix}, \quad k \geq 1$$

- Die Zeilen werden von oben her durchnummeriert, beginnend mit 0 bei der ersten Zeile (das ist die Zeile die nur Einsen enthält).
- Die n-te Hadamard-Folge wird nun definiert als die n-te Zeile von $H_8$, wobei die Zeilen von oben her mit n = 0, 1, 2, ..., 255, der Reihe nach durchnummeriert sind.
- $h_m(i)$ bzw. z(i) sei das i-te Symbol der Folge $h_m$ bzw. z, wobei i = 0, 1, 2, ..., 255, und wobei sich i = 0 auf das am weitesten links notierte Symbol bezieht.
- Das i-te SCH-Code-Wort , $C_{SCH,i}$, wobei i = 0, ..., 15 ist dann definiert als $C_{SCH,i}$ = (1 + j) × <$h_m$(0) × z(0), $h_m$(1) × z(1), $h_m$(2) × z (2), ..., $h_m$(255) × z(255)>, wobei m = (16xi) und das am weitesten links notierte Symbol dem Symbol oder Chip entspricht, das zuerst ausgesandt wird.
- Ein derartiges SCH-Code-Wort ist für jede 16-te Zeile der Matrix $H_8$ definiert; dies ergibt insgesamt 16 verschiedene SCH-Code-Worte.
- Die SSCs, $\{C_0,...,C_{15}\}$, werden nun definiert durch diese SCH-Code-Worte, $C_{SCH,i}$ , als: $C_i = C_{SCH,i}$ , i=0,...,15

  1. Im folgenden werden die zweiten Synchronisationsfolgen auch mit SSCi oder $SSC_i$ bezeichnet, wobei gilt: SSCi = $SSC_i$ = $C_i$ = $C_{SCH,i}$ , i=0,...,15;

Da nun also zu Synchronisationszwecken parallel ein PSC und drei SSCs eines Codesatzes ausgesendet werden und zur Synchronisation empfangsseitig Korrelationsberechnungen durchgeführt werden, hat die Gruppierung des Satzes der SSCs zu Codesätzen einen Einfluß auf die Qualität und den Aufwand dieser Korrelationsberechnungen und somit der Synchronisation bzw. der Zellsuche.

In [5] ist eine verbesserte Gruppierung von SSCs zu benützen Codesätzen vorgeschlagen, wobei die Gruppierung einfach anhand der Reihenfolge der SSCs bestimmt wurde:

  Codesatz 1: $SSC_0$, $SSC_1$, $SSC_2$
  Codesatz 2: $SSC_3$, $SSC_4$, $SSC_5$
  Codesatz 3: $SSC_6$, $SSC_7$, $SSC_8$
  Codesatz 4: $SSC_9$, $SSC_{10}$, $SSC_{11}$

In [1] ist folgende Gruppierung von SSCs zu benützen Codesätzen vorgeschlagen, wobei die Gruppierung nach folgenden Regeln erfolgte:

  a) Wähle als benützte SSCs die 12 SSCs aus den möglichen 16, welche den geringsten RMS Wert (Root Mean Square Value) der Kreuzkorrelation zum PSC haben. Der RMS Wert bezeichnet dabei die Wurzel aus dem mittleren Quadrat der CCF (Kreuzkorrelationsfunktion) des SSC's mit dem PSC. Diese Regel basiert auf folgender Erkenntnis: Besteht eine große Kreuzkorrelation zwischen einem SSC und dem PSC, so ist es möglich, daß von der Mobilstation bei der Suche nach dem PSC, welche typischerweise durch eine Korrelation des Empfangssignals mit dem PSC durchgeführt wird, fälschlicherweise eine derartige große Kreuzkorrelation mit dem SSC als PSC deklariert werden könnte.

  b) Diese 12 SSCs werden derart in Codesätze gruppiert, daß der mittlere RMS-Wert aller drei sich in einem Codesatz befindlichen SSCs auch für die schlechteste Gruppe minimal wird.

Durch die Anwendung dieser Kriterien ergab sich in [1] folgende Gruppierung von SSCs zu benützen Codesätzen:

  Codesatz 1: $SSC_5$, $SSC_8$, $SSC_{11}$
  Codesatz 2: $SSC_0$, $SSC_1$, $SSC_{15}$
  Codesatz 3: $SSC_{12}$, $SSC_{13}$, $SSC_{14}$
  Codesatz 4: $SSC_4$, $SSC_6$, $SSC_{10}$

Wie im weiteren ausgeführt werden wird, ist diese Auswahl aber nicht optimal.

Der Erfindung liegt nun die Aufgabe zugrunde, ein Verfahren zur Synchronisation eines Empfängers mit einem Sender bzw. ein Verfahren zur Zellsuche sowie eine entsprechende Sende- und Empfangseinrichtung anzugeben, welche eine zuverlässige Synchronisation ermöglichen. Diese Aufgabe wird durch die Merkmale der unabhängigen Ansprüche gelöst. Vorteilhafte und zweckmäßige Weiterbildungen ergeben sich aus den abhängigen Ansprüchen.

Erfindungsgemäß wird also zur Synchronisation eines Empfängers mit einem Sender, bei dem von dem Sender an den Empfänger ein erstes Synchronisationssignal mit einer Vielzahl zweiter Synchronisationssignale gesendet wird, wobei ein Satz zweiter Synchronisationssignale derart in benützte und zumindest einen unbenutzten Codesatz untergliedert ist, daß das Maximum der Spitzenwerte der Kreuzkorrelationsfunktionen der zweiten Synchronisationssignale, die durch einen benützten Codesatz bestimmt sind, mit dem ersten Synchronisationssignal minimal ist.

Das Senden eines ersten Synchronisationssignals "mit" zweiten Synchronisationssignalen umfaßt dabei auch, daß das Senden einzelner (beispielsweise nacheinander), mehrerer oder aller zweiter Synchronisationssignale eines Codesatzes während dem Senden des ersten Synchronisationssignals erfolgt.

Die Erfindung bezieht sich dabei insbesondere auf den UTRA TDD Modus; es ist demnach nicht ausgeschlossen, daß zweite Synchronisationssignale eines unbenutzten Codesatzes im UTRA FDD Modus benützt werden auch während der PSC ausgesendet wird. Die Erfindung umfaßt auch den Fall, daß die unbenutzten zweiten Synchronisationssignale nicht als Codesatz aufgefaßt werden.

Die Erfindung beruht dabei auf der Erkenntnis, daß der RMS (Root Mean Square Value) der Kreuzkorrelationsfunktionen CCF weniger relevant ist als der Spitzenwert der CCF.

Dies basiert wiederum zunächst auf der Forderung nach einer schnellen bzw. kurzen PSC-Suche, die aus folgenden drei Gründen so schnell wie möglich durchgeführt werden muß:

- Die PSC-Korrelation erfordert eine kontinuierliche Aktivierung des Funkteils und eine kontinuierliche, hohe Rechenleistung des Basisbandteils der Mobilstation. Daher ist zur Energieeinsparung eine schnelle PSC-Suche erforderlich.
- Während der ersten Zellsuche ist der lokale Oszillator noch nicht durch das Signal der Basisstation in seiner Frequenz kalibriert, sondern weist in der Regel einen erhöhten Frequenzfehler auf. Durch einen vorliegenden Frequenzfehler verschiebt sich allerdings die Zeitbasis der Mobilstation relativ zur Zeitbasis der Basisstation. Daher ist es nicht möglich, die Korrelation des PSC über einen längeren Zeitraum aufzuakkumulieren und dadurch beispielsweise durch Mittelwertbildung ein sichereres Ergebnis zu erhalten.
- Ein Maximum in der Korrelation, die für die PSC-Suche verwendet wird, also ein potentieller Kandidat für die PSC-Suche, wird unmittelbar dadurch verifiziert, daß mit dieser Hypothese für das aus diesem Maximum abgeleitete Zeitraster die zweite und letztlich auch die dritte Stufe der Zellsuche durchgeführt wird. Das ist effizienter, als erst noch länger die PSC-Korrelation und Akkumulation durchzuführen.

Unter diesen speziellen Randbedingungen einer kurzen PSC-Suche ist demnach bei der PSC-Suche (Suche nach einem Maximum der PSC-Korrelation) der Anteil des überlagerten Rauschens noch relativ hoch. Die Kreuzkorrelationen des PSC mit den SSCs sind aber nicht relevant, wenn sie unterhalb dieses typischerweise hohen Rausch-Pegels liegen und werden nur dann zu einer bedeutenden Verschlechterung der Detektion führen, wenn sie über diesem Pegel liegen. Die Wahrscheinlichkeit der Fehl-Detektion steigt exponentiell mit der Größe eines CCF-Maximums an. Daher tragen nur die größten CCF-Maxima signifikant zur Fehl-Detektion bei.

Durch die Erfindung wird erreicht, daß die erste Stufe der Synchronisation, also die Detektion einer Zelle bzw. einer Basisstation anhand eines PSCs zuverlässig, insbesondere zuverlässiger als im Stand der Technik erfolgt.

Eine wesentliche Erkenntnis, die dieser Erfindung zugrunde liegt, ist demnach, daß es im Gegensatz zum Konzept, das dem Vorschlag in [1] zugrunde liegt, nicht darauf ankommt, den mittleren RMS-Wert der Kreuzkorrelationsfunktionen CCF benützten SSCs mit dem PSC innerhalb eines Codesatzes von SSCs zu minimieren, sondern darauf, das Maximum des Spitzenwertes der Kreuzkorrelationsfunktionen der benützten SSCs mit dem PSC zu minimieren.

Eine Ausgestaltung der Erfindung sieht vor, die Zuordnung von SSCs zum ersten Codesatz derart vorzunehmen, daß der Maximalwert der Spitzenwerte der CCF der dem ersten Codesatz zugeordneten SSCs mit dem PSC möglichst gering ist und dann für die folgenden Codesätze das selbe Kriterium für die Auswahl aus den noch keinem Codesatz zugeordneten SSCs verwendet wird.

Diese Ausgestaltung basiert auf der Erkenntnis, daß die in [1] gewählte Gruppierung der SSCs in Codesätze derart, daß der RMS innerhalb eines Codesatzes auch für den schlechtesten Codesatz möglichst gering ist, zu einer niedrigeren Synchronisationszuverlässigkeit führt als darauf zu achten, daß der Maximalwert der Spitzenwerte der CCF für den ersten Codesatz möglichst gering ist und dann für die weiteren Codesätze das selbe Kriterium für die Auswahl aus den noch keinem Codesatz zugeordneten SSCs verwendet wird.

Eine vorteilhafte Weiterbildung der Erfindung sieht vor, die Gruppierung der zweiten Synchronisationsfolgen folgendermaßen durchzuführen:

Codesatz 1: SSC1, SSC3, SSC5;
Codesatz 2: SSC10, SSC13, SSC14;
Codesatz 3: SSC0, SSC6, SSC12;
Codesatz 4: SSC4, SSC8, SSC15.

Dies führt zu folgenden unbenutzten zweiten Synchronisationsfolgen bzw. zu folgendem unbenutzten Codesatz:

SSC2, SSC7, SSC9, SSC11.

Aufwendige Simulationen mit eigens für diesen Zweck erstellten Simulationswerkzeugen führen bei Anwendung der erfindungsgemäßen Kriterien zu dieser speziellen Gruppierung von zweiten Synchronisationsfolgen. Entsprechende Ergebnisse sind in folgenden Tabellen zusammengefaßt:

Tabelle 1:

| maximale Spitzenwerte der CCF des jeweiligen Codesatzes der SSCs für eine Gruppierung in Codesätze gemäß einer vorteilhaften Ausgestaltung der Erfindung: wähle die SSCs mit dem niedrigsten Spitzenwert der CCF mit dem PSC; gruppiere die derart ausgewählten SSCs derart zu Codesätzen, daß das Maximum der Spitzenwerte der CCF der SSCs innerhalb eines jeden Codesatzes minimal wird. | | | | |
|---|---|---|---|---|
| Codesatz | | CCF von SSC mit PSC | | maximaler Spitzenwert der CCF des jeweiligen Codesatzes der SSCs |
| | | Spitzenwert | RMS | |
| | $SSC_5$ | 67 | 9.93 | |
| 1 | $SSC_1$ | 67 | 11.28 | 75 |
| | $SSC_3$ | 75 | 12.58 | |
| | | | | |
| | $SSC_{14}$ | 77 | 11.87 | |
| 2 | $SSC_{10}$ | 77 | 11.24 | 79 |
| | $SSC_{13}$ | 79 | 11.48 | |
| | | | | |
| | $SSC_{12}$ | 79 | 11.62 | |
| 3 | $SSC_6$ | 79 | 11.65 | 81 |
| | $SSC_0$ | 81 | 10.49 | |
| | | | | |
| | $SSC_{15}$ | 83 | 11.48 | |
| 4 | $SSC_8$ | 83 | 12.10 | 89 |
| | $SSC_4$ | 89 | 11.90 | |
| | | | | |
| | $SSC_{11}$ | 99 | 10.46 | |
| Unbenutzt | $SSC_7$ | 99 | 12.91 | |
| | $SSC_9$ | 109 | 12.31 | |
| | $SSC_2$ | 111 | 12.13 | |

Tabelle 2:

| maximale Spitzenwerte der CCF des jeweiligen Codesatzes der SSCs für eine Gruppierung in Codesätze gemäß [1]. | | | | |
|---|---|---|---|---|
| Codesatz | | CCF von SSC mit PSC | | maximaler Spitzenwert der CCF des jeweiligen Codesatzes der SSCs |
| | | Spitzenwert | RMS | |
| | $SSC_5$ | 67 | 9.93 | |
| 1 | $SSC_8$ | 83 | 12.10 | 99 |
| | $SSC_{11}$ | 99 | 10.46 | |
| | | | | |
| | $SSC_0$ | 81 | 10.49 | |
| 2 | $SSC_1$ | 67 | 11.28 | 83 |
| | $SSC_{15}$ | 83 | 11.48 | |
| | | | | |
| | $SSC_{12}$ | 79 | 11.62 | |
| 3 | $SSC_{13}$ | 79 | 11.48 | 79 |
| | $SSC_{14}$ | 77 | 11.87 | |
| | | | | |
| | $SSC_4$ | 89 | 11.90 | |
| 4 | $SSC_6$ | 79 | 11.65 | 89 |
| | $SSC_{10}$ | 77 | 11.24 | |
| | | | | |
| | $SSC_2$ | 111 | 12.13 | |
| Unbe | $SSC_3$ | 75 | 12.58 | |
| nutzt | $SSC_7$ | 99 | 12.91 | |
| | $SSC_9$ | 109 | 12.31 | |

Tabelle 3:

| maximale Spitzenwerte der CCF des jeweiligen Codesatzes der SSCs für eine Gruppierung in Codesätze gemäß [5]. | | | | |
|---|---|---|---|---|
| Codesatz | | CCF von SSC mit PSC | | maximaler Spitzenwert der CCF des jeweiligen Codesatzes der SSCs |
| | | Spitzenwert | RMS | |
| | $SSC_0$ | 81 | 10.49 | |
| 1 | $SSC_1$ | 67 | 11.28 | 111 |
| | $SSC_2$ | 111 | 12.13 | |
| | | | | |
| | $SSC_3$ | 75 | 12.58 | |
| 2 | $SSC_4$ | 89 | 11.90 | 89 |
| | $SSC_5$ | 67 | 9.93 | |
| | | | | |
| | $SSC_6$ | 79 | 11.65 | |

Tabelle 3: (fortgesetzt)

| maximale Spitzenwerte der CCF des jeweiligen Codesatzes der SSCs für eine Gruppierung in Codesätze gemäß [5]. | | | | |
|---|---|---|---|---|
| Codesatz | | CCF von SSC mit PSC | | maximaler Spitzenwert der CCF des jeweiligen Codesatzes der SSCs |
| | | Spitzenwert | RMS | |
| 3 | SSC$_7$ | 99 | 12.91 | 99 |
| | SSC$_8$ | 83 | 12.10 | |
| | | | | |
| | SSC$_9$ | 109 | 12.31 | |
| 4 | SSC$_{10}$ | 77 | 11.24 | 109 |
| | SSC$_{11}$ | 99 | 10.46 | |
| | | | | |
| | SSC$_{12}$ | 79 | 11.62 | |
| Unbe | SSC$_{13}$ | 79 | 11.48 | |
| nutzt | SSC$_{14}$ | 77 | 11.87 | |
| | SSC$_{15}$ | 83 | 11.48 | |

Tabelle 4:

| Zusammenfassung der maximalen Spitzenwerte der CCF für jeden Codesatz für die drei Vorschläge. | | |
|---|---|---|
| maximalen Spitzenwerte der CCF des ganzen Satzes der SSCs | | |
| Ausführungsvariante der Erfindung | Vorschlag in [1] | derzeitige Spezifikation |
| 89 | 99 | 111 |
| 81 | 89 | 109 |
| 79 | 83 | 99 |
| 75 | 79 | 89 |

Eine andere Weiterbildung der Erfindung sieht vor, daß zur Synchronisation die gesendeten Synchronisationsfolgen empfangsseitig, beispielsweise in einer Mobilstation, insbesondere in Form von Korrelationsberechnungen weiterverarbeitet werden.

Die Erfindung wird im Folgenden beispielhaft anhand eines UMTS-Mobilfunksystems beschrieben, wobei auf folgende Figur verwiesen wird:

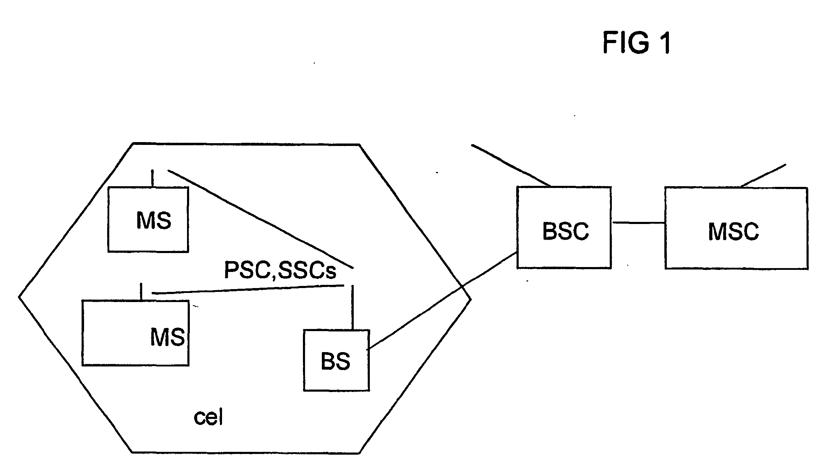

Fig. 1 Prinzipschaltbild eines Mobilfunksystems.

In Figur 1 ist ein zellulares Mobilfunknetz, das beispielsweise ein UMTS (Universal Mobile Telecommunication System) - System darstellt, das aus einer Vielzahl von Mobilvermittlungsstellen MSC besteht, die untereinander vernetzt sind, bzw. den Zugang zu einem Festnetz herstellen. Ferner sind diese Mobilvermittlungsstellen MSC mit jeweils zumindest einem Basisstationscontroller BSC verbunden, der auch durch ein Datenverarbeitungssystem gebildet sein kann.

Jeder Basisstationscontroller BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen übertragen werden. Die Reichweite der Funksignale einer oder im Einzelfall mehrerer Basisstationen definieren im wesentlichen eine Funkzelle cel.

Basisstationen BS und ein Basisstationscontroller BSC können zu einem Basisstationssystem zusammengefaßt werden. Das Basisstationssystem ist dabei auch für die Funkkanalverwaltung bzw. -zuteilung, die Datenratenanpassung, die Überwachung der Funkübertragungsstrecke, Hand-Over-Prozeduren, und für die Zuteilung der zu verwendenden Spreizcodesets zuständig und übermittelt die dazu nötigen Signalisierungsinformationen zu den Mobilstationen MS.

Das UMTS-System und die entsprechenden Komponenten Mobilstationen und/oder Basisstation können dabei im UTRA-TDDund/oder im UTRA-FDD-Modus kommunizieren.

Für eine erste Zellsuche oder den ersten Schritt einer Synchronisation einer Basisstation mit einer Mobilstation senden die Basisstationen BS ein erstes Synchronisationssignal PSC aus. Parallel zu dem PSC senden die Basisstationen eine Vielzahl von zweiten Synchronisationssignalen SSC für einen zweiten Schritt einer Synchronisation einer Basisstation mit einer Mobilstation aus. Dabei werden für UTRA FDD und UTRA TDD die parallel mit dem PSC gesendete Vielzahl zweiter Synchronisationssignale SSC aus der gleichen Menge bzw. dem gleichen Satz von 16 vorgegebenen zweiten Synchronisationsfolgen entnommen.

Je nachdem, in welchem Modus bzw. in welchen Modi die Basisstationen betrieben werden, ist jedoch die Vielzahl zweiter Synchronisationssignale SSC, die mit dem PSC gesendet wird, durch unterschiedliche Codesätze bestimmt, in welche die 16 SSCs gruppiert sind.

Der Satz von 16 SSCs ist dabei im UTRA TDD in fünf Codesätze gruppiert, von denen vier Codesätze, die jeweils drei SSCs enthalten, in UTRA TDD zur Synchronisation benützt werden und ein Codesatz, der vier SSCs enthält, in UTRA TDD nicht zur Synchronisation benützt wird. Drei SSCs eines Codesatzes werden dann parallel mit dem PSC zu Synchronisationszwecken in den Zeitschlitzen ausgesendet, denen ein PSCH (Primary Synchronisation Channel) zugeordnet ist.

Die Gruppierung der zweiten Synchronisationssignale in benützte Codesätze erfolgt dabei folgendermaßen:

Codesatz 1: SSC1, SSC3, SSC5;
Codesatz 2: SSC10, SSC13, SSC14;
Codesatz 3: SSC0, SSC6, SSC12;
Codesatz 4: SSC4, SSC8, SSC15.

Die PSC und SSCs werden dabei durch oben angegebene Verfahren gebildet.

In den Mobilstationen erfolgt die Ermittlung der zeitlichen Lage der ersten Synchronisationsfolge PSC und der zeitlichen Lage der Vielzahl zweiter Synchronisationsfolgen SSCs durch Korrelationsberechnungen. Dabei wird, typischer Weise durch Verwendung eines sog. Matched filters (angepasstes Filter), die Synchronisationsfolge des PSC über den gesamten Rahmen hinweg an jeder möglichen Position mit dem Empfangssignal verglichen. Dabei treten auch alle möglichen Kreuzkorrelationen der SSCs mit dem PSC auf, bei einer Optimierung der SSCs muss also die gesamte Kreuzkorrelationsfunktion untersucht werden. Die erste Synchronisationsfolge wird zur Zeitschlitzsynchronisation verwendet, und die Vielzahl zweiter Synchronisationsfolgen zur Rahmensynchronisation und zur Detektion weiterer Systemparameter.

In einer weiteren Ausgestaltung der Erfindung kann ausgenutzt werden, daß die folgenden SSCs alle den selben Spitzenwert der CCF mit dem PSC aufweisen:

$$SSC_{13}, SSC_{12}, SSC_{6.}$$

Es gibt somit drei unterschiedliche Auswahlmöglichkeiten für die Bildung der Codesätze (zwei zusätzliche zum oben erwähnten Ausführungsbeispiel), die alle eine (annähernd) gleiche Detektions-Wahrscheinlichkeit erlauben. Dabei wird jeweils einer dieser SSCs ($SSC_{13}$, $SSC_{12}$, $SSC_{6}$) im zweiten Codesatz verwendet. In einer bevorzugten Ausgestaltung wird dabei $SSC_{6}$ für den dritten Codesatz verwendet, um eine geringere Differenz der RMS Werte zwischen den Sätzen zu erreichen. Obwohl, wie oben dargestellt, der RMS Wert nicht das primär ausschlaggebende Kriterium ist, kann es doch als nachgeordnetes Kriterium vorteilhaft sein, eine solche Auswahl zu treffen.

In einer weiteren Ausgestaltung der Erfindung wird berücksichtigt, daß während der ersten Zellsuche ein Frequenzfehler bestehen kann, der typischerweise ca.10 kHz betragen kann. In dieser Ausgestaltung wird die Auswahl der Codesätze dann auch in Abhängigkeit von der CCF bei einem Frequenzfehler durchgeführt. Das oben angegebene Auswahlkriterium wird dann dahingehend erweitert, daß nicht die Werte der CCF ohne Frequenzfehler sondern die Werte der CCF mit Frequenzfehler verwendet werden, oder daß ein Kompromiß zwischen den besten Codesätzen mit und ohne Frequenzfehler verwendet wird.

In einer weiteren Ausgestaltung wird berücksichtigt, daß die SSCs einer Gruppe gleichzeitig gesendet werden können, wobei die einzelnen SSCs aber mit einem Wert aus der Menge {+1, -1, +j, -j } moduliert werden. Es werden in dieser Ausgestaltung nicht die Eigenschaften der CCF der einzelnen SSCs mit dem PSC optimiert, sondern der CCF der verschiedenen möglichen Kombinationen der modulierten SSCs mit dem PSC. Die Auswahl kann dabei analog wie oben beschrieben durchgeführt werden, insbesondere unter Berücksichtigung der gleichen Kriterien wie oben beschrieben.

In dieser Anmeldung wird auf folgende Dokumente Bezug genommen. Dabei bezeichnen:

[1] Mitsubishi Electric, "Optimised code sets for PSCH in UTRA TDD", 3GPP TSG RAN WG1#13 Tdoc R1-00-0626, Tokyo, Japan, May 22nd - 25th, 2000

[2] Siemens, Texas Instruments, "Generalised Hierarchical Golay Sequence for PSC with low complexity correlation using pruned efficient Golay correlators", TSG-RAN Working Group 1 (Layer 1) Meeting #5, Tdoc 567/99, Cheju Island, Korea, 01.-04.06.1999.

[5] 3rd Generation Partnership Project; Technical Specification Group Radio Access Network; "Spreading and modulation (TDD)"; 3G TS 25.223 V3.2.0 (2000-03)

**Patentansprüche**

1.  Verfahren zur Synchronisation eines Empfängers mit einem Sender,

    -   bei dem von dem Sender an den Empfänger ein erstes Synchronisationssignal mit einer Vielzahl zweiter Synchronisationssignale gesendet wird, welche einem in Codesätze untergliederten Satz von zweiten Synchronisationssignalen entnommen wird,
    -   bei dem die Vielzahl zweiter Synchronisationssignale, die mit dem ersten Synchronisationssignal gesendet werden, durch einen Codesatz bestimmt ist,
    -   bei dem die Codesätze in benützte und zumindest einen unbenutzten Codesatz gruppiert sind, **dadurch gekennzeichnet, daß** der Satz zweiter Synchronisationssignale derart in Codesätze untergliedert ist, daß das Maximum der Spitzenwerte der Kreuzkorrelationsfunktionen der zweiten Synchronisationssignale, die durch einen benützten Codesatz bestimmt sind, mit dem ersten Synchronisationssignal minimal ist.

2.  Verfahren nach Anspruch 1 zum Einsatz im TDD-Modus eines UMTS-Systems.

3.  Verfahren nach einem der vorhergehenden Ansprüche,
    bei dem im FDD-Modus des UMTS-Systems alle Synchronisationssignale des Satzes zweiter Synchronisationssignale zur Synchronisation verwendet werden.

4.  Verfahren nach einem der vorhergehenden Ansprüche,
    bei dem das erste Synchronisationssignal eine verallgemeinerte hierarchische Golay Folge ist, und
    bei dem die zweiten Synchronisationssignale jeweils durch die positionsweise Multiplikation des ersten Synchronisationssignals mit jeweils einer Zeile einer Hadamard Matrix erhältlich ist.

5.  Verfahren nach einem der vorhergehenden Ansprüche,
    bei dem die Synchronisationssignale folgendermaßen bildbar sind:

    -   das erste Synchronisationssignal Cp ist durch folgende Beziehung bestimmt:

        -   $C_p$=< y(0),y(1),y(2),...,y(255) >, wobei gilt:
            $y$=(1+j)×<a,a,a,-a,-a,a,-a,-a,a,a,a,-a,a,-a,a,a>, wobei gilt:
        -   a = < $x_1$, $x_2$, $x_3$, ..., $x_{16}$ > = < 1, 1, 1, 1, 1, 1, -1, -1, 1, -1, 1, -1, 1, -1, -1, 1 >;

    -   16 zweite Synchronisationssignale {$C_0$,...,$C_{15}$} sind durch folgende Beziehung bestimmt:
    -   $C_i = C_{SCH, i}$, i=0,...,15, wobei gilt:
    -   $C_{SCH,i}$ = (1 + j) × <$h_m$(0) × z(0), $h_m$(1) × z(1), $h_m$(2) × z(2), ..., $h_m$(255) × z(255)>, wobei gilt:
    -   m = (16xi)
        die n-te Hadamardfolge $h_n$ ist eine Reihe einer Matrix $H_8$, welche durch folgende Beziehung rekursiv bildbar ist:

$$H_0 = (1)$$
$$H_k = \begin{pmatrix} H_{k-1} & H_{k-1} \\ H_{k-1} & -H_{k-1} \end{pmatrix}, \quad k \geq 1 \,'$$

wobei die Nummerierung oben mit Null beginnt, n = 0, 1, 2, ..., 255;

- $h_m(i)$ und $z(i)$ bezeichnen das i-te Symbol der Folge $h_m$ bzw. z, wobei i = 0, 1, 2, ...,255 und i =0 dem Symbol ganz links entspricht.

6. Verfahren nach Anspruch 5,
bei dem die benützten Codesätze folgendermaßen definiert sind:

Codesatz 1: SSC1, SSC3, SSC5;
Codesatz 2: SSC10, SSC13, SSC14;
Codesatz 3: SSC0, SSC6, SSC12;
Codesatz 4: SSC4, SSC8, SSC15;

wobei SSCi durch das Synchronisationssignal Ci definiert ist.

7. Verfahren nach einem der vorhergehenden Ansprüche
bei dem empfangsseitig die zeitliche Lage der ersten Synchronisationsfolge und die zeitliche Lage der Vielzahl zweiter Synchronisationsfolgen durch Korrelationsberechnungen bestimmt wird.

8. Verfahren nach einem der vorhergehenden Ansprüche,
bei dem empfangsseitig die erste Synchronisationsfolge zur Zeitschlitzsynchronisation verwendet wird, und die Vielzahl zweiter Synchronisationsfolgen zur Rahmensynchronisation verwendet wird.

9. Verfahren nach einem der vorhergehenden Ansprüche,
bei dem bei dem Minimierungskriterium auch das Maximum der Spitzenwerte der Kreuzkorrelationsfunktionen der zweiten synchronisationssignale, die durch einen benützten Codesatz bestimmt sind, mit dem ersten Synchronisationssignal bei zumindest einem Frequenzfehler berücksichtigt wird.

10. Verfahren nach einem der vorhergehenden Ansprüche,
bei dem bei mehreren Alternativen mit gleichem Maximum der Spitzenwerte der die Kreuzkorrelationsfunktionen der zweiten Synchronisationssignale, die durch einen benützten Codesatz bestimmt sind, mit dem ersten Synchronisationssignal, als nachgeordnetes Kriterium der Root-Mean-Square-Wert dieser Kreuzkorrelationsfunktionen minimiert wird.

11. Verfahren nach einem der vorhergehenden Ansprüche,
bei dem das Maximum der Spitzenwerte der Kreuzkorrelationsfunktionen von modulierten Überlagerungen von zweiten Synchronisationssignalen, die durch einen benützten Codesatz bestimmt sind, mit dem ersten Synchronisationssignal minimiert wird.

12. Sendeeinrichtung, die derart eingerichtet ist,

- dass ein erstes Synchronisationssignal mit einer Vielzahl zweiter Synchronisationssignale gesendet wird, welche einem in Codesätze untergliederten Satz von zweiten Synchronisationssignalen entnommen wird,
- dass die Vielzahl zweiter Synchronisationssignale, die mit dem ersten Synchronisationssignal gesendet werden, durch einen Codesatz bestimmt ist,
- dass die Codesätze in benützte und zumindest einen unbenutzten Codesatz gruppiert sind, **dadurch gekennzeichnet, daß** der Satz zweiter Synchronisationssignale derart in Codesätze untergliedert ist, daß das Maximum der Spitzenwerte der Kreuzkorrelationsfunktionen der zweiten Synchronisationssignale, die durch einen benützten Codesatz bestimmt sind, mit dem ersten Synchronisationssignal minimal ist.

13. Empfangseinrichtung, die zur Synchronisation mit einer Basisstation derart eingerichtet ist,
dass zur Synchronisation ein erstes Synchronisationssignal und eine Vielzahl zweiter Synchronisationssignale verwendet wird, welche einem in Codesätze untergliederten Satz von zweiten Synchronisationssignalen entnommen ist,

- dass die verwendete Vielzahl zweiter Synchronisationssignale durch einen Codesatz bestimmt ist,
- dass die Codesätze in benützte und zumindest einen unbenutzten Codesatz gruppiert sind, **dadurch gekennzeichnet, daß** der Satz zweiter Synchronisationssignale derart in Codesätze untergliedert ist, daß das Maximum der Spitzenwerte der Kreuzkorrelationsfunktionen der zweiten Synchronisationssignale, die durch einen benützten Codesatz bestimmt sind, mit dem ersten Synchronisationssignal minimal ist.

**Claims**

1. Method for synchronizing a receiver with a transmitter,

   - in which a first synchronization signal is transmitted from the transmitter to the receiver with a multiplicity of second synchronization signals which are taken from a set of second synchronization signals that is subdivided into code sets,
   - in which the multiplicity of second synchronization signals that are transmitted with the first synchronization signal is determined by a code set, and
   - in which the code sets are grouped into used code sets and at least one unused code set,

   **characterized in that** the set of second synchronization signals is subdivided into code sets in such a way that the maximum in the peak values of the cross-correlation functions of the second synchronization signals, which are determined by a used code set, with the first synchronization signal is minimal.

2. Method according to Claim 1 for use in the TDD mode of a UMTS system.

3. Method according to one of the preceding claims, in which all the synchronization signals of the set of second synchronization signals are used for synchronization in the FDD mode of the UMTS system.

4. Method according to one of the preceding claims, in which the first synchronization signal is a generalized hierarchic sequence, and in which the second synchronization signals can be obtained in each case by the positional multiplication of the first synchronization signal by in each case one row of a Hadamard matrix.

5. Method according to one of the preceding claims, in which the synchronization signals can be formed in the following way:

   - the first synchronization signal $C_p$ is determined by the following relationship:

     - $C_p = <y(0),y(1),y(2),...,y(255)>$, wherein it holds that:
       $y = (1 + j) \times <a,a,a,-a,-a,a,-a,-a,a,a,a,a,-a,a, - a,a,a>$, wherein it holds that:
     - $a = <x_1, x_2, x_3,...,x_{16}> = <1, 1, 1, 1, 1, 1, -1, -1, 1, -1, 1, -1, 1, -1, -1, 1>$;

   - 16 second synchronization signals $\{C_0,...,C_{15})$ are determined by the following relationship:
   - $C_i = C_{SCH, i}$, i = 0,...,15, wherein it holds that:
   - $C_{SCH,i} = (1 + j) \times <h_m(0) \times z(0),h_m(1) \times z(1), h_m(2) \times z(2), ...,h_m(255) \times z(255)>$, wherein it holds that:
   - $m = (16 \times i)$
     the nth Hadamard sequence $h_n$ is a series of a **Matrix $H_8$,** which can be formed recursively by means of the following relationship:

$$H_0 = (1)$$
$$H_k = \begin{pmatrix} H_{k-1} & H_{k-1} \\ H_{k-1} & -H_{k-1} \end{pmatrix}, \quad k \geq 1 \quad,$$

   the numbering beginning at the top with zero, n = 0, 1, 2, ..., 255;
   - $h_m(i)$ and z(i) denote the ith symbol of the sequence $h_m$ and z, respectively, wherein i = 0, 1, 2, ..., 255 and i = 0 corresponds to the symbol at far left.

6. Method according to Claim 5, in which the used code sets are defined as follows:

   Code set 1: SSC1, SSC3, SSC5;
   Code set 2: SSC10, SSC13, SSC14;
   Code set 3: SSC0, SSC6, SSC12;
   Code set 4: SSC4, SSC8, SSC15;

wherein SSCi is defined by the synchronization signal Ci.

7. Method according to one of the preceding claims, in which the temporal position of the first synchronization sequence and the temporal position of the multiplicity of second synchronization sequences are determined at the receiving end by means of correlation calculations.

8. Method according to one of the preceding claims in which the first synchronization sequence is used at the receiving end for time slot synchronization, and the multiplicity of second synchronization sequences is used for frame synchronization.

9. Method according to one of the preceding claims, in which in the case of the minimization criterion the maximum in the peak values of the cross-correlation functions of the second synchronization signals, which are determined by a used code set, is also taken into account with the aid of the first synchronization signal in conjunction with at least one frequency error.

10. Method according to one of the preceding claims, in which in the case of a plurality of alternatives with the same maximum in the peak values of the cross-correlation functions of the second synchronization signals, which are determined by a used code set, with the first synchronization signal, the root mean square value of this cross-correlation function is minimized as subordinate criterion.

11. Method according to one of the preceding claims, in which the maximum in the peak values of the cross-correlation functions is minimized by modulated superpositions of second synchronization signals, which are determined by a used code set, with the first synchronization signal.

12. Transmitting device which is set up in such a way

- that a first synchronization signal is transmitted with a multiplicity of second synchronization signals which are taken from a set of second synchronization signals that is subdivided into code sets,
- that the multiplicity of second synchronization signals that are transmitted with the first synchronization signal is determined by a code set, and
- that the code sets are grouped into used code sets and at least one unused code set,

**characterized in that** the set of second synchronization signals is subdivided into code sets in such a way that the maximum of the peak values of the cross-correlation functions of the second synchronization signals, which are determined by a used code set, with the first synchronization signal is minimal.

13. Receiving device which is set up for synchronization with a base station in such a way

- that a first synchronization signal and a multiplicity of second synchronization signals which are taken from a set, subdivided into code sets, of second synchronization signals is used for the synchronization,
- that the multiplicity of second synchronization signals used is determined by a code set, and
- that the code sets are grouped into used code sets and at least one unused code set,

**characterized in that** the set of second synchronization signals is subdivided into code sets in such a way that the maximum of the peak values of the cross-correlation functions of the second synchronization signals, which are determined by a used code set, with the first synchronization signal is minimal.

**Revendications**

1. Procédé pour synchroniser un émetteur et un récepteur, dans lequel

- un premier signal de synchronisation est émis avec un grand nombre de deuxièmes signaux de synchronisation, de l'émetteur vers le récepteur, ledit grand nombre de deuxièmes signaux de synchronisation étant tiré d'un jeu de deuxièmes signaux de synchronisation subdivisé en jeux de code,
- le grand nombre de deuxièmes signaux de synchronisation émis avec le premier signal de synchronisation est déterminé par un jeu de code,
- les jeux de code sont groupés en jeux de code utilisés et au moins un jeu de code non utilisé,

**caractérisé en ce que** le jeu de deuxièmes signaux de synchronisation est subdivisé en jeux de code de manière telle que le maximum des valeurs de crête des fonctions de corrélation croisée des deuxièmes signaux de synchronisation déterminés par un jeu de code utilisé et du premier signal de synchronisation est minimal.

2. Procédé selon la revendication 1, destiné à être mis en oeuvre dans le mode TDD d'un système UMTS.

3. Procédé selon l'une des revendications précédentes, dans lequel tous les signaux de synchronisation du jeu de deuxièmes signaux de synchronisation sont utilisés, dans le mode FDD du système UMTS, aux fins de la synchronisation.

4. Procédé selon l'une des revendications précédentes, dans lequel

   - le premier signal de synchronisation est une suite de Golay hiérarchique et généralisée et
   - les deuxièmes signaux de synchronisation peuvent être obtenus respectivement par la multiplication du premier signal de synchronisation, par positions, avec une ligne d'une matrice de Hadamard dans chaque cas.

5. Procédé selon l'une des revendications précédentes, dans lequel les signaux de synchronisation peuvent être constitués comme suit:

   - le premier signal de synchronisation $C_p$ est défini comme étant
   $C_p$ = < y(0), y(1), y(2), ..., y(255) >, avec
   $y = (1 + j)$ x < a, a, a, -a, -a, a, -a, -a, a, a, a, -a, a, -a, a, a >, avec a = < $x_1$, $x_2$, $x_3$, ..., $x_{16}$ > = < 1, 1, 1, 1, 1, 1, -1, -1, 1, -1, 1, -1, 1, -1, -1, 1 >;
   - 16 deuxièmes signaux de synchronisation {$C_0$, ..., $C_{15}$} sont déterminés par la relation suivante:
   - $C_i = C_{SCH, i}$, i = 0, ..., 15, avec
   - $C_{SCH, i} = (1 + j) \times$ <$h_m$(0) $\times$ z(0), hm(1) $\times$ z(1), $h_m$(2) g z(2), ..., $h_m$(255) $\times$ z(255) >, avec
   - m =(16 x i),
   la nième suite de Hadamard $h_n$ est une série d'une matrice $H_8$ pouvant être formée récursivement par la relation suivante:

$$H_0 = (1)$$
$$H_k = \begin{pmatrix} H_{k-1} & H_{k-1} \\ H_{k-1} & -H_{k-1} \end{pmatrix}, \quad k \geq 1$$

,

   la numérotation commençant en haut par zéro, n = 0, 1, 2, ..., 255;
   - $h_m$(i) et z(i) désignant le ième symbole de la suite $h_m$ resp. z avec i = 0, 1, 2, ..., 255 et i = 0 correspondant au symbole le plus à gauche.

6. Procédé selon la revendication 5, dans lequel les jeux de code utilisés dont définis comme suit:

   jeu de code 1: $SSC_1$, $SSC_3$, $SSC_5$ ;
   jeu de code 2: $SSC_{10}$, $SSC_{13}$, $SSC_{14}$ ;
   jeu de code 3: $SSC_0$, $SSC_6$, $SSC_{12}$ ;
   jeu de code 4: $SSC_4$, $SSC_8$, $SSC_{15}$,
   SSCi étant défini par le signal de synchronisation Ci.

7. Procédé selon l'une des revendications précédentes, dans lequel, côté récepteur, la position temporelle de la première suite de synchronisation et la position temporelle du grand nombre de deuxièmes suites de synchronisation sont déterminées par des calculs de corrélation.

8. Procédé selon l'une des revendications précédentes, dans lequel, côté récepteur, la première suite de synchronisation est utilisée pour la synchronisation de créneaux temporels et le grand nombre de deuxièmes suites de synchronisation est utilisé pour la synchronisation de trame.

9. Procédé selon l'une des revendications précédentes, dans lequel il est également tenu compte, dans le critère de minimisation, du maximum des valeurs de crête des fonctions de corrélation croisée des deuxièmes signaux de synchronisation déterminés par un jeu de code utilisé et du premier signal de synchronisation en présence d'au moins une erreur de fréquence.

10. Procédé selon l'une des revendications précédentes, dans lequel, étant donné plusieurs alternatives ayant un même maximum des valeurs de crête des fonctions de corrélation croisée des deuxièmes signaux de synchronisation déterminés par un jeu de code utilisé et du premier signal de synchronisation, la valeur RMS (Root Mean Square Value) desdites fonctions de corrélation croisée est minimisée en tant que critère subalterne.

11. Procédé selon l'une des revendications précédentes, dans lequel est minimisé le maximum des valeurs de crête des fonctions de corrélation croisée de superpositions modulées de deuxièmes signaux de synchronisation déterminés par un jeu de code utilisé et du premier signal de synchronisation.

12. Dispositif émetteur, aménagé de manière telle que

  - un premier signal de synchronisation est émis avec un grand nombre de deuxièmes signaux de synchronisation, lequel est tiré d'un jeu de deuxièmes signaux de synchronisation subdivisé en jeux de code,
  - le grand nombre de deuxièmes signaux de synchronisation émis avec le premier signal de synchronisation est déterminé par un jeu de code,
  - les jeux de code sont groupés en jeux de code utilisés et au moins un jeu de code non utilisé,

  **caractérisé en ce que** le jeu de deuxièmes signaux de synchronisation est subdivisé en jeux de code de manière telle que le maximum des valeurs de crête des fonctions de corrélation croisée des deuxièmes signaux de synchronisation déterminés par un jeu de code utilisé et du premier signal de synchronisation est minimal.

13. Dispositif récepteur, aménagé, aux fins de la synchronisation avec une station de base, de manière telle que

  - un premier signal de synchronisation et un grand nombre de deuxièmes signaux de synchronisation sont utilisés pour la synchronisation, ledit grand nombre de deuxièmes signaux de synchronisation étant tiré d'un jeu de deuxièmes signaux de synchronisation subdivisé en jeux de code,
  - le grand nombre de deuxièmes signaux de synchronisation utilisé est déterminé par un jeu de code,
  - les jeux de code sont groupés en jeux de code utilisés et au moins un jeu de code non utilisé,

  **caractérisé en ce que** le jeu de deuxièmes signaux de synchronisation est subdivisé en jeux de code de manière telle que le maximum des valeurs de crête des fonctions de corrélation croisée des deuxièmes signaux de synchronisation déterminés par un jeu de code utilisé et du premier signal de synchronisation est minimal.

FIG 1

MSC

BSC

BS

MS

MS

PSC,SSCs

cel